(19) Europäisches Patentamt
European Patent Office
Office européen des brevets

(11) Publication number: **0 508 464 B1**

(12) **EUROPEAN PATENT SPECIFICATION**

(45) Date of publication of patent specification: **23.08.95**

(51) Int. Cl.[6]: **C08L 23/16**, C08L 83/04, //(C08L23/16,23:16,83:04), (C08L83/04,23:16,23:16)

(21) Application number: **92106257.6**

(22) Date of filing: **10.04.92**

The file contains technical information submitted after the application was filed and not included in this specification

(54) **Rubber composition.**

(30) Priority: **11.04.91 JP 78740/91**

(43) Date of publication of application: **14.10.92 Bulletin 92/42**

(45) Publication of the grant of the patent: **23.08.95 Bulletin 95/34**

(84) Designated Contracting States: **DE FR GB**

(56) References cited:
**EP-A- 0 246 745**
**US-A- 4 942 202**

**WORLD PATENTS INDEX LATEST Week 8728, Derwent Publications Ltd., London, GB; AN 87-193935 & JP-A-62 121 763**

(73) Proprietor: **SUMITOMO CHEMICAL COMPANY LIMITED**
**5-33, Kitahama 4-chome,**
**Chuo-ku**
**Osaka-shi,**
**Osaka 541 (JP)**

Proprietor: **Shin-Etsu Chemical Co., Ltd.**
**6-1, Otemachi 2-chome**
**Chiyoda-ku**
**Tokyo 100 (JP)**

(72) Inventor: **Yamamoto, Keisaku**
**5-3-14, Aobadai**
**Ichihara-shi,**
**Chiba 299-01 (JP)**
Inventor: **Yoshida, Nobuyuki**
**4-19-4, Aobadai**
**Ichihara-shi,**
**Chiba 299-01 (JP)**
Inventor: **Tsuji, Mitsuji**
**1-9, Yushudainishi**
**Ichihara-shi,**
**Chiba 299-01 (JP)**
Inventor: **Usuda, Eiichi**
**3-10-7, Izumidai**
**Ichihara-shi,**
**Chiba 229-01 (JP)**
Inventor: **Fukuda, Takeshi**
**2-15-38, Annaka**
**Annaka-shi,**
**Gunma 379-01 (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 508 464 B1

Inventor: **Nakamura, Tsutomu**
**791-4, Yanase**
**Annaka-shi,**
**Gunma 379-01 (JP)**

(74) Representative: **Blumbach, Kramer & Partner**
**Patentanwälte**
**Radeckestrasse 43**
**D-81245 München (DE)**

## Description

The present invention relates to a rubber composition containing oil-extended ethylene-propylene rubber and organopolysiloxane as essential components.

Ethylene-propylene rubber is superior in mechanical strength and processability. On the other hand, organopolysiloxane which is so-called silicone rubber is superior in heat resistance and oil resistance. Attempts to mix these two rubbers have been made in order to make the best use of the characteristics of these rubbers. However, no characteristics of these rubbers are sufficiently exhibited by mere mixing of these rubbers. Under the circumstances, it has been proposed to introduce a reactive site into an organopolysiloxane or to add a third substance thereto.

For example, Japanese Patent Kokoku Nos. 55-030741, 55-039248, 55-039261, 57-017011, 58-013092, 58-013093 and 58-055181 and Japanese Patent Kokai No. 63-199253 disclose that covulcanizability, heat resistance and oil resistance are improved by using organopolysiloxane having mercapto groups or unsaturated bonds and that rubber compositions superior in heat resistance, compression set characteristics, electrical insulaion properties and flame retardance are obtained by adding specific silicas and specific silicon compounds.

Furthermore, document US-A 4,942,202 discloses a rubber composition comprising a saturated elastomer, another elastomer and an organopolysiloxan which are copolymerized in the presence of an organic peroxide. Both elastomers may be ethylene-propylene rubbers (EPR). Process oils may be added to the rubber composition as compounding chemicals. The EPR's are not oil-extended.

From a viewpoint of industrial utilization, rubber compositions are required to have not only excellent processability, but also large strength. However, generally processability and strength are properties which are contrary to each other and these have been incompatible with each other. Therefore, we are obliged to be satisfied with such unsatisfactory means that the strength is preferentially selected at the sacrifice of the processability in some case and vice versa in another case.

Under the circumstances, the inventors have conducted intensive research for providing rubber compositions having the respective excellent properties of ethylene-propylene rubber and silicone rubber and besides excellent in both the processability and the strength.

An object of the present invention is to provide a rubber composition which contains, as main components, ethylene-propylene rubber and organopolysiloxane and which is excellent in all of processabilities such as extrusion processability and roll processability, strength, heat resistance and oil resistance. In other words, a rubber composition having the above properties in well-balanced state is obtained. This object is attained by the following characteristic construction of the present invention.

That is, the present invention relates to a rubber composition characterized by containing 30 to 90% by weight of the following component (A), 0 to 50% by weight of the following component (B) and 5 to 40% by weight of the following component (C) (with a proviso that (A) + (B) + (C) = 100% by weight):

(A) oil-extended ethylene-propylene rubber containing, based on 100 parts by weight of ethylene-propylene rubber, 20 to 120 parts by weight of extension oil and having a Mooney viscosity (ML 121 °C) in the range of 30 to 100,

(B) un-oil-extended ethylene-propylene rubber, and

(C) organopolysiloxane represented by the average compositional formula $R_nSiO_{(4-n)/2}$ (wherein R represents a substituted or unsubstituted monovalent hydrocarbon group and n denotes a number of 1.98 to 2.05) and having at least two aliphatic unsaturated bonds and/or mercapto groups in one molecule.

The present invention will be explained in detail below.

The component (A) in the present invention is oil-extended ethylene-propylene rubber which contains 20 to 120 parts by weight of extension oil based on 100 parts by weight of tile ethylene-propylene rubber and has a Mooney viscosity (ML 121 °C) of 30 to 100.

The ethylene-propylene rubber includes ethylene-propylene copolymer rubber and ethylene-propylene-non-conjugated diene terpolymer rubber. The non-conjugated diene includes dicyclopentadiene, ethylidene norbornene, 1,4-hexadiene and the like. Any contents of ethylene, propylene and non-conjugated diene may be used, but preferably the weight ratio of ethylene/propylene is 80 to 20/20 to 80. Iodine value should be in the range of 0 to 40. From a point of heat resistance, it is preferred that amount of the nonconjugated diene is not too much and suitable iodine value is in the range of 0 to 20, more preferably in the range of 2 to 10.

The ethylene-propylene rubber can be produced using so-called Ziegler-Natta catalysts which are familiar to the skilled in the art. As the catalysts there may be used, for example, organoaluminum compounds and tri-pentavalent vanadium compounds soluble in hydrocarbon solvents in combination. The organoaluminum compounds include, for example, alkylaluminum sesquichloride, trialkylaluminum, dialkylaluminum monochloride and mixtures thereof. The vanadium compounds include, for example, vanadium oxytrichloride, vanadium oxytetrachloride and vanadate compounds represented by $VO(OR')_{n'}X_{3-n'}$ (0 <n' ≦ 3 and R' is a straight or branched chain or cyclic hydrocarbon group of 1 to 10 carbon atoms). The so-called Q value of the molecular weight distribution (weight-average molecular weight/number-average molecular weight) of the ethylene-propylene rubber is usually in the range of 2 to 20.

Content of the extension oil in the component (A) is in the range of 20 to 120 parts by weight, preferably in the range of 40 to 100 parts by weight based on, 100 parts by weight of ethylenepropylene rubber. A Mooney viscosity (ML 121 °C) of the ethylene-propylene rubber after oil-extended is in the range of 30 to 100, preferably 40 to 80.

In the present invention, both the content of the extension oil and the Mooney viscosity after oil-extension must be within the ranges specified above. If content of the extension oil is less than 20 parts by weight, roll processability and strength are not well-balanced and oil resistance is deteriorated. High molecular weight ethylene-propylene rubber containing more than 120 parts by weight of the extension oil and adjusted to 30 to 100 in the Mooney viscosity (ML 121 °C) is hardly produced.

Any types of extension oil can be used. It includes, for example, paraffinic oils such as Sunpar 110, 115, 120, 130 and 150® (trademarks for paraffinic oils manufactured by Sun Oil Co.) and naphtenic oils such as Shellflex 212, 213, 371, 411, 732 and 790® (trademarks for naphthenic oils manufactured by Shell Oil Co.).

The component (B) in the present invention is un-oil-extended ethylene-propylene rubber. Examples thereof are ethylene-propylene copolymer rubber and ethylene-propylene-non-conjugated diene terpolymer rubber. The non-conjugated diene includes, for example, dicyclopentadiene, ethylidene norbornene and 1,4-hexadiene. Any contents of ethylene, propylene and non-conjugated diene may be used, but preferably the weight ratio of ethylene/propylene is 80 to 20/20 to 80. Iodine value should be in the range of 0 to 40. The ethylene-propylene rubber used in component (B) and the ethylene-propylene rubber used to be subjected to oil-extension in the component (A) may be inherently identical or different. A Mooney viscosity (ML 121 °C) of the component (B) is preferably in the range of 30 to 70, more preferably in the range of 40 to 60.

This component (B) is produced using so-called Ziegler-Natta catalysts which are familiar catalysts to the skilled in the art. As the catalysts, there may be used, for example, organoaluminum compounds and tri-pentavalent vanadium compounds soluble in hydrocarbon solvents in combination. The organoaluminum compounds include, for example, alkylaluminum sesquichloride, trialkylaluminum, dialkylaluminum monochloride and mixtures thereof. The vanadium compounds include, for example, vanadium oxytrichloride, vanadium oxytetrachloride and vanadate compounds represented by $VO(OR'')_{n''}X_{3-n''}$ (0 <n'' ≦ 3 and R'' is a straight or branched chain or cyclic hydrocarbon group of 1 to 10 carbon atoms). Preferably a combination of $VO(OR'')_{n''}X_{3-n''}$ (O <n'' ≦ 3), more preferably vanadium compounds of $VO(OR'')_{n''}X_{3-n''}$ (0 < n'' ≦ 3 and OR'' is a secondary alcohol residue) as the vanadium compounds and an alkylaluminum sesquichloride as the aluminum compounds are used.

The so called Q value of the molecular weight distribution (weight-average molecular weight/number-average molecular weight) of the un-oil-extended ethylene-propylene rubber as the component (B) is usually in the range of 2 to 20, preferably in the range of 3 to 9.

The component (C) in the present invention is organopolysiloxane represented by the average compositional formula $RnSiO_{(4-n)/2}$ (wherein R represents a substituted or unsubstituted monovalent hydrocarbon group and n denotes a number of 1.98 to 2.05) and having at least two aliphatic unsaturated bonds and/or mercapto groups in one molecule. Examples of the symbol R are unsubstituted monovalent hydrocarbon groups selected from alkyl groups such as a methyl group, an ethyl group, a propyl group and a butyl group; cycloalkyl groups such as a cyclohexyl group; aryl groups such as a phenyl group and a tolyl group; alkenyl groups such as a vinyl group and an allyl group. The R may also be groups in which a part or all of hydrogen atoms which bond to carbon atoms of the hydrocarbon groups are substituted with a halogen atom, a cyano group or the like, such as a chloromethyl group, a trifluoropropyl group and a cyanoethyl group.

The organopolysiloxane represented by the average compositional formula $RnSiO_{(4-n)/2}$ is usually obtained by subjecting cyclic organopolysiloxane represented by the chemical formula

$$\left[\!-\!(R_2SiO)\!-\!\right]_p$$

(p is an integer of 3 to 5) to ring-opening polymerization in the presence of acid or alkali catalysts. The polymerization degree is determined taking into account of $R_3SiO_{1/2}$ unit in the molecule or amount of water used. Organopolysiloxane used in the present invention is preferably that which has relatively high viscosity with a polymerization degree of 100 or higher, preferably 1000 or higher. Furthermore, the organopolysiloxane preferably contains functional groups such as a vinyl group and a mercapto group in its molecules, said groups being useful to produce crosslinked structures while the present composition is cured.

The rubber composition of the present invention must contain the above components (A) to (C) at a specific ratio. That is, it should contain 30 to 90% by weight of the component (A), 0 to 50% by weight of the component (B) and 5 to 40% by weight of the component (C) (with a proviso that (A) + (B) + (C) is 100% by weight).

Proportion of the component (A) is in the range of 30 to 90% by weight. If proportion of the component (A) is too small, processability and strength of the resulting rubber composition are not compatible, namely, the rubber composition is inferior in balancing of these properties. If proportion of the component (A) is too large, the resulting rubber composition is inferior in heat resistance.

Proportion of the component (B) is in the range of 0 to 50% by weight and in order that the resulting rubber composition is especially excellent in extrusion processability, it is preferably in the range of 5 to 40% by weight. If proportion of the component (B) is more than 50% by weight, characteristics of the high molecular weight oil-extended ethylene-propylene rubber used as the component (A) are degraded, resulting in deterioration of oil resistance and of balancing between roll processability and strength.

Proportion of the component (C) is in the range of 5 to 40% by weight, preferably 15 to 35% by weight. If proportion of the component (C) is too small, the resulting rubber composition is inferior in heat resistance and oil resistance. On the other hand, if proportion of the component (C) is too large, the resulting rubber composition is inferior in processability and strength.

One of the characteristics of the present invention is to use oil-extended ethylene-propylene rubber as the component (A). That is, the component (A) contains extension oil specified in the present invention and has a Mooney viscosity of a specific value and a relatively high molecular weight. Such high molecular weight copolymer rubber is difficult to handle and process without oil-extension owing to its high viscosity. However, the characteristic of the present invention is not merely to make rubber compositions handleable by using the oil-extended rubber. That is, according to the present invention, blending properties with the component (C) are improved by using the above oil-extended rubber whereby characteristics of respective components used are sufficiently exhibited.

The rubber composition of the present invention is obtained by kneading given amounts of the components (A) to (C) by usually employed rubber compounding apparatuses such as Banbury mixer, kneaders and twin rolls. In ths case, if necessary, there may be added various fillers as reinforcing agents (carbon, silica and the like) or extenders, pigments, crosslinking agents, various carbon functional silanes, crosslinking accelerators, aging inhibitors, antioxidants, ultraviolet absorbers, flame retardants, softening agents, processing aids and so on. Besides, superior extensibility is imparted and roll processability is improved by adding process oils.

The composition of the present invention is cured by organic peroxides, sulfur or sulfur vulcanisers. Alternatively, the curing is made by irradiation with high energy rays such as electron rays. The organic peroxides include, for example, dicumyl peroxide, di-t-butyl peroxide, t-butylcumyl peroxide, 2,5-dimethyl-2,5-di(t-butylperoxy)hexane, 2,5-dimethyl-2,5-di(t-butylperoxy)hexyne-3, and 1,1-bis-t-butylperoxy-3,3,5-trimethylcyclohexane. The sulfur vulcanizers include, for example, dipentamethylenethiuram tetrasulfide. The kneading for obtaining the composition of the present invention may be mixing with heating. In this mixing, the curing catalysts should not be added before temperature of the composition has been lowered to a temperature lower than the decomposition temperature of the catalysts.

The rubber composition of the present invention is used in a wide variety of fields taking advantage of its excellent properties. Some examples of the uses are various shaped products such as tubes; sealants such as O-ring and gaskets; various products for automobiles such as ignition cord coating materials; parts of various office electronic equipments; electrical wires; and sports goods.

The present invention will be explained by the following examples.

Example 1

Eighty parts by weight of an oil-extended ethylene-propylene rubber (weight ratio of ethylene/propylene: 63/37; iodine value: 10; containing an extension oil in an amount of 70 parts by weight for 100 parts by weight of the rubber before oil-extension and having a Mooney viscosity ML 121°C of 66 after oil-extension) as the component (A), 20 parts by weight of an organopolysiloxane (an organopolysiloxane

comprising 0.5 mol% of methylvinylsiloxane unit and 99.5 mol% of dimethylsiloxane unit, n = 2.0) as the component (C), 70 parts by weight of wet silica Nipsil VN3® manufactured by Japan Silica Co., 17 parts by weight of a process oil (Sunpar 2280® manufactured by Sun Oil Co.), 10 parts by weight of active zinc white, 1 part by weight of stearic acid, 2 parts by weight of mercaptobenzimidasole and 1 part by weight of Antigen RD® (manufactured by Sumitomo Chemical Co., Ltd.) as a stabilizer, 2 parts by weight of a sulfur-containing silicone (Si-69® manufactured by Degussa Co.) and 5 parts by weight of $\alpha \cdot \omega$-polysiloxane diol (polymerization degree: 10-20) were uniformly mixed to obtain a compound. Then, to the resulting compound were added 2.7 parts by weight of dicumyl peroxide as a curing agent and 0.6 part by weight of a curing aid (Sumifine BM® manufactured by Sumitomo Chemical Co., Ltd.), followed by subjecting to uniform mixing by twin rolls to obtain an unvulcanized compound. This unvulcanized compound was evaluated on roll processability and extrusion processability and besides, sheets of 2 mm thick were prepared from the compound.

The roll processability was evaluated in the following manner. Unvulcanized compounds were allowed to stick onto twin rolls at 40 °C. Stickiness to the rolls, presence or absence of holes and size of holes formed in the sheets which sticked to the rolls and state of tearing at both ends of the sheets which sticked to the rolls were observed and evaluated by the following four levels.

◎ : The best
○ : Good
△ : Bad
X : The worst

The extrusion processability was evaluated in the following manner. Unvulcanized compounds were extruded through a 45 mmØ extruder under the conditions of die temperature: 100 °C, revolving number: 50 rpm, and a Garvey die. The state of extruded products was observed and evaluated by the following four levels.

◎ : The best
○ : Good
△ : Bad
X : The worst

Then, the above prepared sheets were vulcanized at 170 °C for 10 minutes under a pressure of 100 kg/cm$^2$ and besides, were heated at 150 °C for 2 hours. The thus obtained vulcanized sheets were evaluated on strength, hardness, elongation, oil resistance and heat resistance.

Oil resistance was evaluated in terms of volume change of a piece of the vulcanized sheets of 2 mm thick caused by swelling when dipped in JIS #3 oil at 150 °C for 70 hours.

Heat resistance was evaluated in terms of change in elongation of a piece of the vulcanized sheets of 2 mm when held at 185 °C for 7 days.

The results are shown in Table 1.

Examples 2 to 5 and Comparative Examples 1 to 7

Example 1 was repeated except that the conditions shown in Tables 1 - 3 were employed. In Example 3, amount of the process oil was 20 parts by weight in place of 17 parts by weight and in Example 5, amount of the wet silica was 60 parts by weight in place of 70 parts by weight.

The results are shown in Tables 1 - 3.

It can be seen from the results that the compositions in all Examples which satisfied the requirements of the present invention are satisfactory in all of the evaluated properties and are excellent in so-called balance of the properties.

On the other hand, the compositions of Comparative Examples 1 to 4 in which content of the component (A) is too low and that of the component (B) is too high are inferior in (roll) processability, strength and oil resistance.

The composition of Comparative Example 5 in which content of the component (A) is too high and the component (C) is not contained is inferior in heat resistance.

The composition of Comparative Example 6 in which content of the component (C) is too high is inferior in (extrusion) processability and strength.

The composition of Comparative Example 7 in which content of the extension oil is too low is inferior in balance between processability and in oil resistance.

That is, the compositions which do not satisfy the requirements of the present invention are inferior in some of the evaluated properties and are unsatisfactory in so-called balance of properties.

Table 1

| | Examples 1 | 2 | 3 | 4 | 5 |
|---|---|---|---|---|---|
| Components (A)-(C) (wt%) | | | | | |
| Component (A) Type A-1* | 80 | 60 | 45 | 41 | 70 |
| Type A-2* | | | | | |
| Component (B) Type B-1* | | | 30 | 40 | |
| Type B-2* | | | | | |
| Type B-3* | | | | | |
| Component (C) | 20 | 40 | 25 | 20 | 30 |
| Results of evaluation | | | | | |
| Properties of unvulcanized compound | | | | | |
| Roll Processability | ◎ | ◎ | ◎ | ◎ | ◎ |
| Extrusion processability | ○ | ○ | ◎ | ◎ | ○ |
| Properties after vulcanized | | | | | |
| Strength at break ($kgf/cm^2$) | 150 | 120 | 130 | 120 | 134 |
| Hardness JIS-A | 60 | 59 | 65 | 66 | 51 |
| Elongation at break (%) | 580 | 570 | 650 | 660 | 700 |
| Oil resistance (%)* | 101 | 85 | 135 | 148 | 90 |
| Heat resistance (%)* | -46 | -41 | -40 | -45 | -43 |

Table 2

| | Comparative Examples 1 | 2 | 3 | 4 |
|---|---|---|---|---|
| Components (A)-(C) (wt%) | | | | |
| Component (A) Type A-1* | 25 | | | |
| Type A-2* | | | | |
| Component (B) Type B-1* | 55 | 70 | | |
| Type B-2* | | | 70 | |
| Type B-3* | | | | 70 |
| Component (C) | 20 | 30 | 30 | 30 |
| Results of evaluation | | | | |
| Properties of unvulcanized compound | | | | |
| Roll processability | △ | △ | X | △ |
| Extrusion processability | ◎ | ◎ | X | △ |
| Properties after vulcanized | | | | |
| Strength at break (kgs/$cm^2$) | 108 | 106 | 157 | 117 |
| Hardness JIS-A | 66 | 62 | 67 | 64 |
| Elongation at break (%) | 660 | 720 | 500 | 560 |
| Oil resistance (%)* | 178 | 192 | 165 | 180 |
| Heat resistance (%)* | -43 | -25 | -47 | -30 |

Table 3

| | Comparative Examples 5 | Comparative Examples 6 | Comparative Examples 7 |
|---|---|---|---|
| Components (A)-(C) (wt%) | | | |
| Component (A) Type A-1* | 100 | 50 | |
| Type A-2* | | | 70 |
| Component (B) Type B-1* | | | |
| Type B-2* | | | |
| Type B-3* | | | |
| Component (C) | 0 | 50 | 30 |
| Results of evaluation | | | |
| Properties of unvulcanized Compound | | | |
| Roll Processability | ◎ | ○ | △ |
| Extrusion processability | △ | △ | △ |
| Properties after vulcanized | | | |
| Strength at break (kgf/cm$^2$) | 191 | 95 | 125 |
| Hardness JIS-A | 61 | 57 | 63 |
| Elongation at break (%) | 600 | 560 | 620 |
| Oil resistance (%)* | 130 | 78 | 155 |
| Heat resistance (%)* | -56 | -39 | -63 |

* Type A-1: ML 121°C = 66, Weight ratio of ethylene/propylene = 63/37, Iodine value = 10, Amount of extension oil = 70 parts by weight
* Type A-2: ML 121°C = 62, Weight ratio of ethylene/propylene = 59/41, Iodine value = 21, Amount of extension oil = 10 parts by weight
* Type B-1: ML 121°C = 53, Weight ratio of ethylene/propylene = 52/48, Iodine value = 0
* Type B-2: ML 121°C = 66, Weight ratio of ethylene/propylene = 71/29, Iodine value = 10
* Type B-3: ML 121°C = 38, Weight ratio of ethylene/propylene = 53/47, Iodine value = 5
* Oil resistance %: Volume change at 150°C x 70 hours
* Heat resistance: Change of elongation at 185°C x 7 days

As explained above, the present invention provides a rubber composition mainly composed of ethylene-propylene rubber and organopolysiloxane and excellent in all of processabilities such as roll processability and extrusion processability, strength, heat resistance, and oil resistance, namely, well balanced in these properties.

## Claims

**1.** A rubber composition which comprises 30 to 90% by weight of the following component (A), 0 to 50% by weight of the following component (B) and 5 to 40% by weight of the following component (C) based on 100% by weight of (A) + (B) + (C):
(A) oil-extended ethylene-propylene rubber containing, based on 100 parts by weight of the ethylene-propylene rubber, 20 to 120 parts by weight of extension oils and having a Mooney viscosity (ML 121 ° C) in the range of 30 to 100,
(B) un-oil-extended ethylene-propylene rubber, and
(C) organopolysiloxane which is represented by the average compositional formula $R_nSiO_{(4-n)/2}$ wherein R represents a substituted or unsubstituted monovalent hydrocarbon group and n denotes a number of 1.98 to 2.05 and which has at least two aliphatic unsaturated bonds and/or mercapto groups in one molecule.

**2.** A rubber composition according to claim 1, wherein the ethylene-propylene rubber as the component (A) is ethylene-propylene copolymer rubber or ethylene-propylene-non-conjugated diene terpolymer rubber.

3. A rubber composition according to claim 1, wherein the ethylene-propylene rubber as the component (A) is ethylene-propylene copolymer rubber or ethylene-propylene-non-conjugated diene terpolymer rubber which has a weight ratio of ethylene/propylene of 80 to 20/20 to 80 and an iodine value of 0 to 40.

4. A rubber composition according to claim 3, wherein the iodine value is 2 to 10.

5. A rubber composition according to claim 3, wherein the iodine value is 0 to 20.

6. A rubber composition according to claim 1, wherein content of the extension oil in the component (A) is in the range of 40 to 100 parts by weight based on 100 parts by weight of the ethylene-propylene rubber.

7. A rubber composition according to claim 1, wherein the component (A) has a Mooney viscosity (ML 121 °C) of 40 to 80.

8. A rubber composition according to claim 1, wherein the ethylene-propylene coplymer rubber as the component (B) is ethylene-propylene copolymer rubber or ethylene-propylene-non-conjugated diene terpolymer rubber.

9. A rubber composition according to claim 1, wherein the ethylene-propylene rubber as the component (B) is ethylene-propylene copolymer rubber or ethylene-propylene-non-conjugated diene terpolymer rubber which has a weight ratio of ethylene/propylene of 80 to 20/20 to 80 and an iodine value of 0 to 40.

10. A rubber composition according to claim 1, wherein the component (B) has a Mooney viscosity (ML 121 °C) of 30 to 70.

11. A rubber composition according to claim 1, wherein the component (B) has a Mooney viscosity (ML 121 °C) of 40 to 60.

12. A rubber composition according to claim 1, wherein the component (C) has a polymerization degree of at least 100.

13. A rubber composition according to claim 1, wherein the component (C) has a polymerization degree of at least 1000.

14. A rubber composition according to claim 1, wherein content of the component (B) is in the range of 5 to 40% by weight.

15. A rubber composition according to claim 1, wherein content of the component (C) is in the range of 15 to 35% by weight.

**Patentansprüche**

1. Kautschuk-Zubereitung, welche umfaßt:
   - 30 bis 90 Gew.- % der nachfolgend genannten Komponente (A);
   - 0 bis 50 Gew.-% der nachfolgend genannten Komponente (B); und
   - 5 bis 40 Gew.-% der nachfolgend genannten Komponente (C), bezogen auf 100 Gew.-% der Komponenten (A) + (B) + (C):

     (A) Öl-gestreckter Ethylen-Propylen-Kautschuk, der - bezogen auf 100 Gewichtsteile des Ethylen-Propylen-Kautschuks - 20 bis 120 Gewichtsteile Strecköle enthält und eine Mooney-Viskosität (ML 121 °C) im Bereich Von 30 bis 100 aufweist;

     (B) nicht-Öl-gestreckter Ethylen-Propylen-Kautschuk; und

     (C) ein Organopolysiloxan, das wiedergegeben wird durch die mittlere Summenformel $R_nSiO_{(4-n)/2}$, worin R für eine substituierte oder unsubstituierte einwertige Kohlenwasserstoff-Gruppe steht und n für eine Zahl Von 1,98 bis 2,05 steht und das wenigstens zwei aliphatische ungesättigte Bindungen und/oder Mercapto-Gruppen in einem Molekül aufweist.

2. Kautschuk-Zubereitung nach Anspruch 1, worin der Ethylen-Propylen-Kautschuk als Komponente (A) ein Ethylen-Propylen-Copolymer-Kautschuk oder ein Ethylen-Propylen-nicht-konjugiertes Dien-Terpolymer-Kautschuk ist.

3. Kautschuk-Zubereitung nach Anspruch 1, worin der Ethylen-Propylen-Kautschuk als Komponente (A) ein Ethylen-Propylen-Copolymer-Kautschuk oder Ethylen-Propylen-nicht-konjugiertes Dien-Terpolymer-Kautschuk ist, der ein Gewichtsverhältnis von Ethylen/Propylen von 80 bis 20/20 bis 80 und einen Iod-Wert von 0 bis 40 aufweist.

4. Kautschuk-Zubereitung nach Anspruch 3, worin der Iod-Wert 2 bis 10 beträgt.

5. Kautschuk-Zubereitung nach Anspruch 3, worin der Iod-Wert 0 bis 20 beträgt.

6. Kautschuk-Zubereitung nach Anspruch 1, worin der Gehalt an Strecköl in der Komponente (A) im Bereich von 40 bis 100 Gewichtsteilen liegt, bezogen auf 100 Gewichtsteile des Ethylen-Propylen-Kautschuks.

7. Kautschuk-Zubereitung nach Anspruch 1, worin die Komponente (A) eine Mooney-Viskosität (ML 121 °C) von 40 bis 80 hat.

8. Kautschuk-Zubereitung nach Anspruch 1, worin der Ethylen-Propylen-Copolymer-Kautschuk als Komponente (B) ein Ethylen-Propylen-Copolymer-Kautschuk oder ein Ethylen-Propylen-nicht konjugiertes Dien-Terpolymer-Kautschuk ist.

9. Kautschuk-Zubereitung nach Anspruch 1, worin der Ethylen-Propylen-Kautschuk als Komponente (B) ein Ethylen-Propylen-Copolymer-Kautschuk oder Ethylen-Propylen-nicht-konjugiertes Dien-Terpolymer-Kautschuk ist, der ein Gewichtsverhältnis von Ethylen/Propylen von 80 bis 20/20 bis 80 und einen Iod-Wert von 0 bis 40 aufweist.

10. Kautschuk-Zubereitung nach Anspruch 1, worin die Komponente (B) eine Mooney-Viskosität (ML 121 °C) von 30 bis 70 hat.

11. Kautschuk-Zubereitung nach Anspruch 1, worin die Komponente (B) eine Mooney-Viskosität (ML 121 °C) von 40 bis 60 hat.

12. Kautschuk-Zubereitung nach Anspruch 1, worin die Komponente (C) einen Polymerisationsgrad von wenigstens 100 hat.

13. Kautschuk-Zubereitung nach Anspruch 1, worin die Komponente (C) einen Polymerisationsgrad von wenigstens 1000 hat.

14. Kautschuk-Zubereitung nach Anspruch 1, worin der Gehalt der Komponente (B) im Bereich von 5 bis 40 Gew.-% liegt.

15. Kautschuk-Zubereitung nach Anspruch 1, worin der Gehalt der Komponente (C) im Bereich von 15 bis 35 Gew.- % liegt.

**Revendications**

1. Composition de caoutchouc qui comprend de 30 à 90 % en poids du constituant (A) suivant, de 0 à 50 % du constituant (B) suivant, de 5 à 40 % en poids du constituant (C) suivant, pour 100 % en poids de (A) + (B) + (C) :
   (A) un caoutchouc d'éthylène et de propylène étendu à l'huile contenant, pour 100 parties en poids du caoutchouc d'éthylène et de propylène, de 20 à 120 parties en poids d'huiles d'extension et ayant une consistance Mooney (ML 121 °C) de l'ordre de 30 à 100,
   (B) un caoutchouc d'éthylène et de propylène non étendu à l'huile, et
   (C) un organo-polysiloxane représenté par la formule moyenne de composition $R_nSiO_{(4-n)/2}$, dans laquelle R représente un groupe hydrocarboné substitué ou non substitué monovalent et n désigne

un nombre de 1.98 à 2.05 et qui a au moins deux liaisons aliphatiques insaturées et/ou deux groupes mercapto dans une seule molécule.

**2.** Composition de caoutchouc suivant la revendication 1, dans laquelle le caoutchouc d'éthylène et de propylène servant de constituant (A) est un caoutchouc en copolymère d'éthylène et de propylène ou un caoutchouc en terpolymère d'éthylène, de propylène et de diène non conjugué.

**3.** Composition de caoutchouc suivant la revendication 1, dans laquelle le caoutchouc d'éthylène et de propylène servant de constituant (A) est un caoutchouc en copolymère d'éthylène et de propylène ou un caoutchouc en terpolymère d'éthylène, de propylène et de diène non conjugué qui a un rapport pondéral de l'éthylène au propylène de 80 à 20/20 à 80 et un indice d'iode de 0 à 40.

**4.** Composition de caoutchouc suivant la revendication 3, dans laquelle l'indice d'iode est compris entre 2 et 10.

**5.** Composition de caoutchouc suivant la revendication 3, dans laquelle l'indice d'iode est compris entre 0 et 20.

**6.** Composition de caoutchouc suivant la revendication 1, dans laquelle la teneur en huile d'extension du constituant (A) est comprise entre 40 et 100 parties en poids pour 100 parties en poids du caoutchouc d'éthylène et de propylène.

**7.** Composition de caoutchouc suivant la revendication 1, dans laquelle le constituant (A) a une consistance Mooney (ML 121 °C) de 40 à 80.

**8.** Composition de caoutchouc suivant la revendication 1, dans laquelle le caoutchouc en copolymère d'éthylène et de propylène servant de constituant (B) est un caoutchouc en copolymère d'éthylène et de propylène ou un caoutchouc en terpolymère d'éthylène, de propylène et de diène non conjugué.

**9.** Composition de caoutchouc suivant la revendication 1, dans laquelle le caoutchouc en copolymère d'éthylène et de propylène servant de constituant (B) est un caoutchouc en copolymère d'éthylène et de propylène ou un caoutchouc en terpolymère d'éthylène, de propylène et de diène non conjugué qui a un rapport pondéral de l'éthylène au propylène de 80 à 20/20 à 80 et un indice d'iode de 0 à 40.

**10.** Composition de caoutchouc suivant la revendication 1, dans laquelle le constituant (B) a une consistance Mooney (ML 121 °C) de 30 à 70.

**11.** Composition de caoutchouc suivant la revendication 1, dans laquelle le constituant (B) a une consistance Mooney (ML 121 °C) de 40 à 60.

**12.** Composition de caoutchouc suivant la revendication 1, dans laquelle le constituant (C) a un degré de polymérisation d'au moins 100.

**13.** Composition de caoutchouc suivant la revendication 1, dans laquelle le constituant (C) a un degré de polymérisation d'au moins 1.000.

**14.** Composition de caoutchouc suivant la revendication 1, dans laquelle la teneur en le constituant (B) est comprise entre 5 et 40 % en poids.

**15.** Composition de caoutchouc suivant la revendication 1, dans laquelle la teneur en le constituant (C) est comprise entre 15 et 35 % en poids.